## Europäisches Patentamt

## European Patent Office

## Office européen des brevets

(19)

(11) Numéro de publication: **0 128 072**
**B1**

(12) **FASCICULE DE BREVET EUROPÉEN**

(45) Date de publication du fascicule du brevet:
**18.03.87**

(21) Numéro de dépôt: **84400987.8**

(22) Date de dépôt: **15.05.84**

(51) Int. Cl.⁴: **G 06 F 7/52**

(54) **Multiplieur binaire avec extension de signe pour la multiplication de nombres signés ou non signés.**

(30) Priorité: **20.05.83 FR 8308431**

(43) Date de publication de la demande:
**12.12.84 Bulletin 84/50**

(45) Mention de la délivrance du brevet:
**18.03.87 Bulletin 87/12**

(84) Etats contractants désignés:
**DE FR GB IT NL**

(56) Documents cité:
**US-A-4 389 500**

**PATENTS ABSTRACTS OF JAPAN, vol. 7, no. 142, 22
juin 1983, page 106P205
COMPUTER, vol. 11, no. 10, octobre 1978, Long
Beach (US); S. WASER: "High-speed monolithic
multipliers for real-time digital signal processing",
pages 19-29
THE RADIO AND ELECTRONIC ENGINEER, vol. 49,
no. 5, mai 1979, Londres (GB) F. DEMMELMEIER: "A
fast multiplier module", pages 250-254**

(73) Titulaire: **SOCIETE POUR L'ETUDE ET LA
FABRICATION DE CIRCUITS INTEGRES
SPECIAUX - E.F.C.I.S., 17, avenue des Martyrs,
F-38100 Grenoble (FR)**

(72) Inventeur: **Mougeat, Paul, THOMSON- CSF SCPI
173, bld Haussmann, F-75379 Paris Cedex 08 (FR)**
Inventeur: **Picco, André, THOMSON- CSF SCPI
173, bld Haussmann, F-75379 Paris Cedex 08 (FR)**

(74) Mandataire: **Guérin, Michel, THOMSON- CSF SCPI
19, avenue de Messine, F-75008 Paris (FR)**

# 0 128 072

**Description**

La présente invention concerne les multiplieurs binaires.

Le principe de la multiplication de nombres binaires est classique: le multiplicande est multiplié par le chiffre de poids le plus faible du multiplicateur, puis par le chiffre de poids immédiatement supérieur, et ainsi de suite jusqu'au poids le plus fort; il en résulte à chaque fois un produit partiel, et les différents produits partiels sont additionnés avec un décalage latéral d'un chiffre vers la gauche entre chaque produit partiel et le suivant. La somme de tous les produits partiels progressivement décalés constitue le resultat de la multiplication.

Cependant, pour augmenter la vitesse de multiplication, on prévoit généralement de réduire le nombre de produits parties à additionner, en regroupant les bits du multiplicateur selon un décodage approprié.

Dans une variante de l'algorithme de Booth, on ne génère que $1 + n/2$ produits partiels au lieu de n pour un multiplicateur à n chiffres, chacun de ces produits partiels ayant comme valeurs possibles non pas simplement 0 ou X (X étant le multiplicande) mais 0, X, -X ou 2X.

Les produits partiels réalisés peuvent dont être positifs ou négatifs. S'ils sont négatifs, on utilisera pour les représenter la convention dite du "complement à deux" où le bit de poids le plus fort est égal à 1 et est affecté d'un signe négatif, tandis que les autres bits sont affectés d'un signe positif.

Lorsqu'on fait une multiplication binaire en additionnant successivement plusieurs produits partiels progressivement décalés à gauche, il ne faut pas oublier de procéder à ce que l'on appelle une extension de signe des nombres négatifs. Un tel procédé est connu, entre autre de "The Radion and Electronic Engineer, vol. 49 N°5, mai 1979, pages 250-254." Cette extension de signe consiste à répéter le bit de signe vers la gauche pour ne pas fausser le résultat de l'addition par un bit de signe qui ne serait pas a la position de poids le flus fort du résultat de l'addition.

Ainsi, la multiplication suivante du multiplicande signé X = 1011 (X = -5) par un multiplicateur Y = 0101 (Y = +5) conduit à un résultat faux si on l'écrit sans extension de signe:

```
        1 0 1 1        (-5)
    x   0 1 0 1        (+5)
        1 0 1 1
      0 0 0 0
    1 0 1 1
  0 0 0 0
  0 1 1 0 1 1 1      (+55) résultat faux.
```

La multiplication doit s'écrire avec extension de signe comme ci-dessous:

```
        1 0 1 1        (-5)
    x   0 1 0 1        (+5)
    1 1 1 1 0 1 1
    0 0 0 0 0 0
    1 1 0 1 1
    0 0 0 0
    1 1 1 0 0 1 1 1    (-25) résultat juste.
```

Pour effectuer une multiplication, il faudra donc tenir compte de ces bits supplémentaires dits "d'extension de signe" qui doivent être ajoutés à la gauche des produits partiels successifs.

Une première difficulté vient du nombre d'additionnneurs élémentaires qui devraient être rajoutes pour prendre en compte ces bits d'extension de signe. Ce nombre est éléve pour une multiplication 16 bits par 16 bits, et il serait très souhaitable de le réduire au maximum.

Une deuxième difficulté vient de ce qu'on souhaite effectuer des multiplications binaires avec des nombres

2

sigtiés ou non signés: le multiplicande X comme le multiplicateur Y peuvent être signes ou non signes et la signification de leur bit de poids le plus fort n'est pas la même selon qu'ils sont signés ou non. Par exemple 1101 représente -3 si on sait que c'est un nombre signe mais représente +13 si on sait que c'est un nombre non signé.

On conçoit que l'extension de signe sera différente selon que le multiplicande X est signé ou non (cette extension de signe reste nécessaire même pour des nombres non signés car on réalise des produits partiels qui, eux, sont de toutes façons signés étant donné qu'il faut pouvoir réaliser soit X soit -X).

La présente invention propose une structure de multiplieur telle que l'extension de signe soit prise en compte pour des nombres signés comme pour des nombres non signés sans adjonction d'additionneurs supplémentaires par rapport à ceux qui sont de toutes façons prévus independamment de toute question d'extension de signe.

Le multiplieur auquel s'applique la présente invention comprend une pluralité de décodeurs recevant chacun deux bits du multiplicateur (Y) et éventuellement une retenue issue du décodeur de rang immédiatement inférieur, chaque décodeur fournissant des signaux de commande définissant, pour deux bits donnés du multiplicateur, un produit partiel parmi quatre possibles 0, X, -X ou 2X (X étant le multiplicande) à additionner aux produits partiels précédents. L'addition d'un produit partiel aux précédents s'effectue dans une rangée d'additionneurs élémentaires recevant les sorties d'une rangée d'aiguillages commandés par un décodeur associé à cette même rangée et à ce produit partiel, les additionneurs recevant par ailleurs les sorties d'additionneurs de la rangée précédente.

Selon l'invention, chaque décodeur commande également un module d'extension de signe qui reçoit le bit de plus fort poids du multiplicande et un signal indiquant le mode de représentation, signé ou non signé, du multiplicande, ce module fournissant un signal appliqué à une entrée de nombre à additionner d'un additionneur de la rangée correspondant au décodeur suivant.

Plus précisément, le module fournit un signal (T1) qui peut prendre les valeurs suivantes en fonction du bit de plus fort polds ($x_{15}$) du multiplicande et en fonction du produit partiel défini par le decodeur qui commande ce module:

| produit partiel : 0 | multiplicande signé | $T1 = 1$ |
| " " : X | " " | $T1 = x_{15}*$ |
| produit partiel : -X | multiplicande signé | $T1 = x_{15}$ |
| produit partiel : 0 | multiplicande non signé | $T1 = 1$ |
| " " : X | " " | $T1 = 1$ |
| " " : -X | " " | $T1 = 0$ |

Dans tout ce qui suit l'astérisque indique le complément d'un nombre binaire.

Le signal (T1) fourni par le module d'extension de signe est appliqué à un additionneur recevant par ailleurs (pour les produits partiels 0, X, -X), le bit ($x_{14}$) précédent le bit de plus fort poids du multiplicande.

Pour tenir compte du cas où le produit partiel défini par un décodeur est 2X, on prévoit de plus que le module d'extension de signe commandé par ce décodeur fournit en fait deux signaux (T1 et U1), que le deuxième est nul sauf éventuellement si le produit partiel est 2X et que dans ce dernier cas, le premier signal est égal à $x_{15}*$ et le deuxième signal est égal à 0 (multiplicande signé) ou $x_{15}$ (multiplicande non signé).

Le premier signal est appliqué à l'avant-dernier additionneur de la rangée correspondant au décodeur suiviant; le second signal est appliqué au dernier additionneur de cette rangée. Ce dernier additionneur reçoit par ailleurs la sortie du dernier aiguillage de la rangée qui lui est associée (aiguillage fournissant le bit de plus fort poids $x_{15}$, ou son complément, ou le bit immédiatement précédent, ou encore un niveau zéro); enfin, ce dernier additionneur de chaque rangée reçoit sur une entrée supplémentaire un niveau logique "1".

Pour terminer, il faut signaler qu'il est prévu en outre, pour la première rangée d'additionneurs, un module d'extension de signe supplémentaire recevant le produit $x_{15}.y_0$ du bit de plus fort poids du multiplicande et du bit de plus faible poids du multiplicateur, ainsi que le signal indiquant si le multiplicande est signé, ce module fournissant des signaux appliqués à des entrées de l'ante-pénultième et de l'avant dernier additionneur de la première rangée.

D'autres caractéristiques et avantages de l'invention apparaîtront à la lecture de la description détaillée qui suit et qui est faite en référence aux dessins annexés dans lesquels:
- la figure 1 représente schématiquement les éléments permettant l'addition des trois premiers produits partiels de la multiplication;
- la figure 2 représente la structure en rangées d'aiguillages et d'additionneurs, plus précisément à propos de l'addition du quatrième produit partiel aux précédents;
- la figure 3 représente la structure selon l'invention pour l'extension de signe;
- la figure 4 représente le module d'extension de signe supplémentaire de la première rangée d'additionneurs;
- la figure 5 représente la structure d'un mojule d'extension de signe normal d'une rangée quelconque.

L'algorithme de multiplication utilisé met en jeu quatre produits partiels 0, X, -X, 2X où X est le multiplicande à 16 chiffres $x_0$ à $x_{15}$.

Cet algorithme consiste a examiner deux à deux les bits $Y_0$ a $Y_{15}$ du multiplicateur Y et à engendrer, pour chaque groupe de deux bits consécutifs, un produit partiel 0, X, -X ou 2X.

En fait on engendre un premier produit partiel 0 ou X pour $y_0$ (selon que $y_0$ est égal à 0 ou 1) puis des produits partiels pour les groupes de deux bits successifs $y_1y_2$, $y_3y_4$ etc., $y_{13}y_{14}$ et enfin un neuvième et dernier produit partiel pour $y_{15}$ (car $y_{15}$ joue un rôle particulier puisque c'est un bit de signe lorsque Y est un nombre signé). On doit noter que lorsque les produits partiels sont additionnes entre eux, il y a un décalage de deux crans a gauche d'un produit partiel au suivant puisque l'algorithme utilisé n'engendre qu'un produit partiel sur deux (sauf toutefois entre le premier et le deuxième produit partiel ou il n'y a qu'un cran de décalage).

Si un groupe de deux bits à les valeurs suivantes: 00, 01, 10 ou 11, on comprend que le produit partiel à engendrer pour ce groupe doit être respectivement 0, X, 2X ou 3X; en fait on considérera que 3X c'est -X + 4X et que 4X est équivalent a X, sur le produit partiel suivant (puisque ce dernier est décilé de deux crans à gauche); on réalisera donc un produit partiel -X pour le groupe de deux bits considéré et on transmettra une sorte de retenue pour le groupe de deux bits immédiatement consécutif.

S'il y a une retenue, le décodage des deux bits immédiatement consécutifs donnera alors les produits partiels suivants $X+0$, $X+X$, $X+2X$ ou $X+3X$, c'est à dire X, 2X, 3X ou 4X selon que les bits ont les valeurs 00, 01, 10 ou 11. Là encore 3X peut s'écrire -X $+4X$; donc, les deux derniers cas (bits 10 ou 11) correspondront à un produit partiel -X ou 0 avec une retenue pour le décodage du groupe de bits suivant; Il y a donc propagation possible de la retenue de ce décodage d'un groupe au suivant.

Autrement dit, le premier produit partiel à réaliser est 0 ou X selon que $y_0$ égale 0 ou 1; le second produit partiel est 0, X, 2X ou -X selon que $y_1y_2$ égale 00 ou 01 ou 10 ou 11 et dans le dernier cas il y a génération d'une retenue, les produits partiels suivants (du troisième au huitième) sont 0, X, 2X ou -X si le groupe de deux bits correspondants est 00, 01, 10 ou 11 et qu'il n'y a pas de retenue issue du décodage du groupe précédent; les produits partiels en question sont au contraire égaux à X, 2X, -X ou 0 si le groupe de deux bits est 00, 01, 10 ou 11 et qu'il y a une retenue issue du groupe précédent; enfin, le neuvième produit partiel a les valeurs possibles suivantes;

0 ou X pour $y_{15}$ = 0 ou 1 si Y est un nombre non signe et s'il n'y a pas de retenue du groupe précédent;

0 ou -X pour $y_{15}$ = 0 ou 1 si Y est un nombre signé et s'il n'y a pas de retenue du groupe precedent;

X ou 2X pour $y_{15}$ = 0 ou 1 si Y est un nombre non signé et s'il y a une retenue du groupe précédent;

X ou 0 pour $y_{15}$ = 0 ou 1 si Y est un nombre signé et s'il y a une retenue.

Toutes les indications précédentes permettent de construire un décodeur (D1, D2, etc.) pour chaque groupe de deux bits et pour le bit $y_{15}$ (décodeur inutile pour $y_0$: il suffit d'une rangée de portes ET commandées par $y_0$ et les bits de X).

Chaque décodeur reçoit un groupe de deux bits consécutifs de Y et, sauf pour le premier décodeur, la retenue du décodeur précédent; chaque décodeur engendre quatre signaux de commande qu'on appellera $C_0$, $C_x$, $C_{2x}$, $C_{xm}$ et une retenue pour le décodeur suivant; les quatre signaux de commande ont pour fonction l'établissement d'un produit partiel bien déterminé, respectivement 0, X, 2X ou -X pour le rang correspondant à ce décodeur.

Un produit partiel de rang déterminé doit être additionné à la somme des produits partiels déjà additionnés entre eux, avec un décalage approprié vers la gauche (un cran entre le premier produit partiel P0 et le second P1, deux crans entre les produits partiels successifs P1 à P8).

Il en résulte que le multiplieur a une structure en rangées successives d'additionneurs dont les sorties fournissent les produits partiels cumulés.

La première rangée d'additonneur ($A1_0$ à $A1_{17}$) a trois séries d'entrées pour recevoir respectivement les produits partiels P0, P1 et P2, avec les décalages à gauche appropriés (un cran et deux crans).

P0 est égal à $y_0$.X et est engendré par une série de portes ET comandées par le bit de plus faible poids $y_0$ du multiplicateur.

P1 est égal à 0 ou X ou 2X ou -X selon la commande qui est active parmi les commandes $C_0$, $C_x$, $C_{2x}$, $C_{xm}$ issue du premier décodeur D1 (décodeur de $y_1y_2$). P1 est engendré par une première série d'aiguillages $PP1_0$ $PP1_1$...$PP1_{15}$ commandés par le premier décodeur D1.

P2 est 0 ou X ou 2X ou -X selon la commande qui est active parmi les commandes $C_0$, $C_x$, $C_{2x}$, $C_{xm}$ du deuxième décodeur D2 (décodeur de $y_3y_4$); P2 est engendré par une deuxième série d'aiguillages $PP2_0$, $PP2_{15}$ commandés par le deuxième décodeur D2. Ainsi de suite, chaque produit partiel est engendré par une série d'aiguillages commandés par un décodeur associé à ce produit partiel.

La première rangée d'additionneurs doit additionner les trois premiers produits partiels P0, P1 et P2. Les sorties des portes ET sont appliquées à une première serie d'entrées des additionneurs. Les sorties des aiguillages de la première série d'aiguilliges sont appliquées à une deuxième série d'entrées et les sorties des aiguillages de la deuxième série sont appliquées à une troisième série d'entrées des additionneurs.

Si la commande $C_0$ issue d'un décodeur est active, le produit partiel à réaliser est 0; les aiguillages de la série correspondante transmettent des bits 0 sur les entrées correspondantes des additionneurs.

Si la commande $C_x$ est active, le produit partiel à réaliser est X; les aiguillages dirigent les bits $x_i$ du multiplicande vers les entrées appropriées des additionneurs; si la commande $C_{2x}$ est active, il faut additionner 2X; les aiguillages dirigent non pas $x_i$ mais $x_{i-1}$ vers les additionneurs car le terme 2X est l'équivalent du terme X décalé d'un cran à gauche.

Enfin, si la commande $C_{xm}$ est active, il faut additionner -X , ce que l'on fera en considérant que -X s'écrit $X^* + 1$ dans la notation en complément à deux des nombres signés ($X^*$ est le complément de X); d'une part on appliquera un nombre 1 (par exemple la commande $C_{xm}$ elle-même) sur une entrée de retenue d'un additionneur de position 0 ($A1_0$ si c'est le produit partiel P1 qui est égal à -X, $A2_0$ si c'est le produit partiel P2); d'autre part les aiguillages dirigeront vers les entrées des additionneurs les compléments $x_i^*$ des bits $x_i$.

Pour préciser complètement cette structure, on peut prendre le cas d'un additionneur de position i ($A1_i$) de la première rangée.

Cet additionneur reçoit sur sa première entrée (correspondant au produit partiel P0) le terme $y_0.x_{i+1}$.

Il reçoit sur sa deuxième entrée (produit partiel P1) un terme issu d'un aiguillage de position i ($PP1_i$) de la première série d'aiguillages. Ce terme est 0 ou $x_i$ ou $x_{i-1}$ ou $x_i^*$ selon que le produit partiel P1 à réaliser est 0 ou X ou 2X ou -X.

Il reçoit enfin sur sa troisième entrée (sauf pour i plus petit que 2) un terme correspondant au produit partiel P2, issu d'un aiguillage de position i-2 ($PP2_{i-2}$) de la deuxième série d'aiguillages. Ce terme est 0 ou $x_{i-2}$ ou $x_{i-3}$ ou $x^*_{i-2}$ selon que le produit partiel P2 à réaliser est 0 ou X ou 2X ou -X.

Cet additionneur de position i ($A1i$) a une sortie somme représentant les trois premiers produits partiels cumulés et une sortie retenue qui est envoyée à l'additionneur de position i-1 de la deuxième rangée d'additionneurs ($A2_{i-1}$). La sortie somme est envoyée à la première entrée de l'additionneur de position i-2 de la deuxième rangée ($A2_{i-2}$). Pour i=0 la sortie somme constitue un résultat partiel de multiplication (bit $r_1$ du résultat XY, le bit $r_0$ étant simplement $x_0.y_0$) et la sortie retenue est envoyée à la deuxième entrée de l'additionneur de position 1 de la première rangée ($A1_1$); pour i=1, la sortie somme constitue un autre résultat partiel (bit $r_2$ du résultat R).

Lorsque P1 doit être égal à 2X ($C_{2x}$ actif pour le premier décodeur D1), l'aiguillage de position 0 de la première série ($PP1_0$) dirige un bit zéro sur la deuxième entrée de l'additionneur de position 0 de la première rangée ($A1_0$); lorsque P2=2X ($C_{2x}$ actif pour le deuxième décodeur D2, l'aiguillage de position 0 de la deuxième série ($PP2_0$) dirige un bit zéro vers la troisième entrée de l'additionneur de position 2 ($A1_2$);

Lorsque P1 = -X, la commande $C_{xm}$ du premier décodeur (D1) est utilisée pour appliquer un bit "un" sur la troisième entrée de l'additionneur de position 0 de la première rangée ($A1_0$).

Lorsque P2 = -X, la commande $C_{xm}$ du deuxième décodeur (D2) établit un bit "un" sur la troisième entrée de l'additionneur de position 0 de la deuxième rangée d'additionneurs ($A2_0$).

Pour terminer la description de la première rangée d'additionneurs, il faut préciser qu'il est prevu des additonneurs de position 16 et 17 (18 additonneurs au total par rangée pour un multiplicande à 16 bits).

L'additionneur de position 16 ($A1_16$) reçoit la sortie de l'aiguillage de position 14 ($PP2_{14}$) de la deuxième série; l'additionneur de position 17 ($A1_{17}$) reçoit la sortie de l'aiguillage de position 15 ($PP2_{15}$) de la deuxième série, donc un bit 0 ou $x_{14}$ ou $x_{15}$ ou $x_{15}^*$.

En ce qui concerne le reste de la structure du multiplieur il se compose de rangées successives d'aiguillages (pour l'élaboration des produits partiels succcssifs P3, P4, etc;) et de rangées d'additionneurs correspondant à ces rangées d'aguillages.

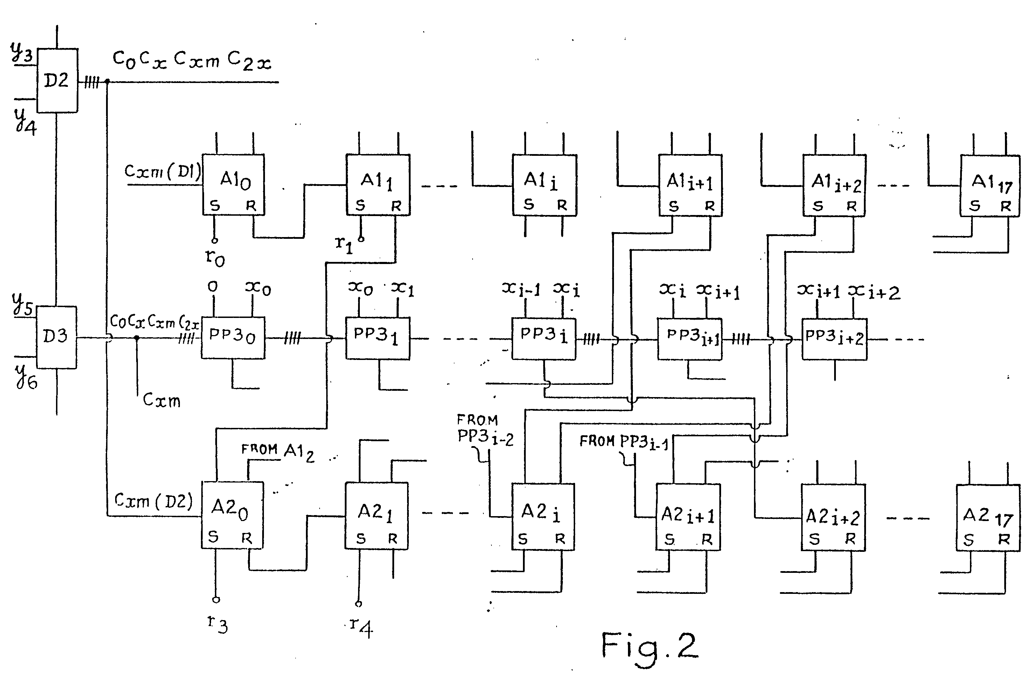

Cette structure est représentée à la figure 2 pour les première et seconde rangées d'additionneurs.

Une rangée d'additionneurs reçoit sur une première série d'entrées les sorties sommes des additionneurs de la rangée précédente (avec un décalage de deux crans à gauche); sur une deuxième série d'entrées les sorties retenues des additionneurs de la rangée précédente (avec un décalage d'un cran), et sur une troisième série d'entrées les sorties des aiguillages correspondant à la même rangée d'additionneurs (avec un décalage de deux crans à droite).

Autrement dit, l'additionneur de position i ($A2_i$) reçoit la sortie somme de l'additionneur de position i+2 de la rangée précédente ($A1_{i+2}$), la sortie retenue de l'additionneur de position i+1 de la rangée précédente ($A1_{i+1}$), et la sortie de l'aiguillage de position i-2 de la même rangée (aiguillage $PP3_{i-2}$) qui transmet donc des bits 0 ou $x_{i-2}$ ou $x^*_{i-2}$ ou $x_{i-3}$ selon la commande active pour le décodeur D3 de la rangée correspondante.

Pour chaque rangée, l'additionneur de position 0 ($A2_0$ par exemple) reçoit sur son entrée de retenue la commande $C_{xm}$ issue du décodeur D2 correspondant à la rangée précédente Il fournit sur sa sortie somme un bit de résultat de la multiplication ($r_3$) et sa sortie retenue est reliée à l'entrée de retenue de l'additionneur de position 1 ($A2_1$) de la même rangée. Ce dernier fournit aussi un bit de résultat de la multiplication ($r_4$) sur sa sortie somme.

L'essentiel de la structure du multiplieur peut être établi à partir des indications qui précèdent;

Les aiguillages peuvent facilement être réalisés sachant ce qu'ils doivent transmettre (0 ou $x_i$ ou $x_{i-1}$ ou $x_i^*$) en fonction des commandes qu'ils reçoivent.

Il reste à réaliser l'extension de signe.

Pour un multiplieur 16 bits par 16 bits, cela nécessiterait normalement non pas 18 additionneurs (positions 0 à 17) par rangée mais plutôt 32 pour la première rangée, 30 pour la deuxième rangée, puis 28, 26, etc.

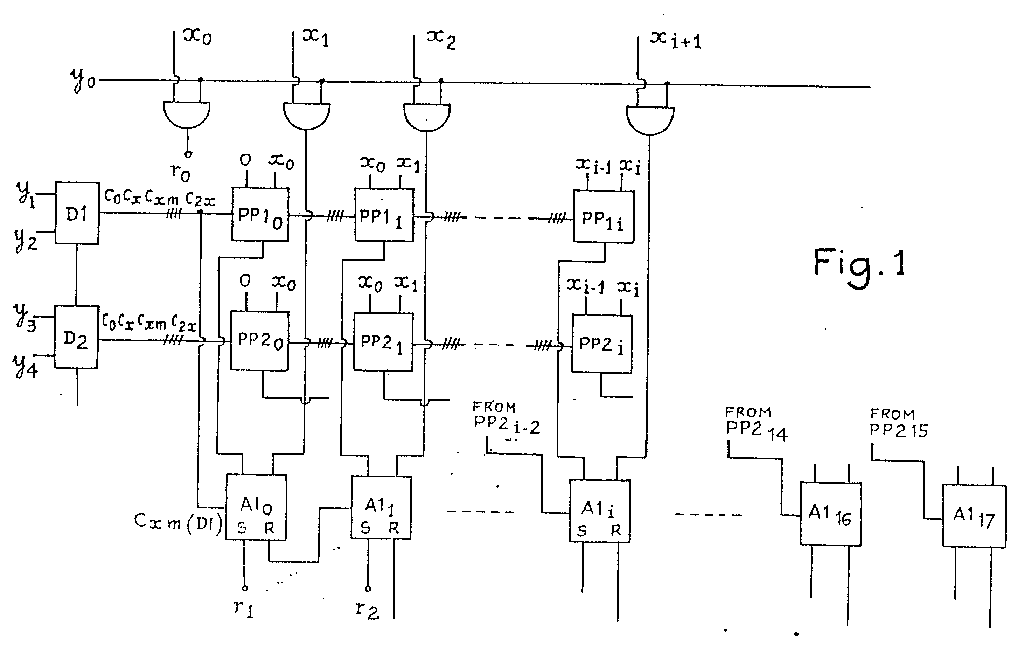

L'invention résulte de la remarque que l'on peut remplacer les bits de signe à étendre par des valeurs qui résument la totalité de l'influence de l'extension de signe sur le résultat de la multiplication, et qu'on peut appliquer ces valeurs non pas sur des additionneurs supplémentaires mais sur les entrées libres des additionneurs de position 16 et 17 de chaque rangée. En effet, la structure qui a été décrite en référence aux figures 1 et 2 montre que les additionneurs de position 16 possedent une entrée inutilisée et ceux de position 17 possédent deux entrées inutilisées. De plus, pour la première rangée, on a même deux entrées inutilisées pour l'additonneur de position 16 et une pour l'additionneur de position 15.

Les valeurs à rajouter pour tenir compte de l'extension de signe dépendent:
- de la valeur du bit $x_{15}$ du multiplicande;
- du fait que ce bit est un bit de signe ou non (multiplicande signé ou non signé);
- de chaque produit partiel à réaliser 0, X, -X ou 2X.

Ces valeurs sont élaborées, pour chaque rangée d'additionneurs, par un module d'extension de signe, qui est commandé par les commandes $C_o$, $C_x$, $C_{2x}$, $C_{xm}$ issues du décodeur correspondant à la rangée d'additionneurs précédente: par exemple, le décodeur D3 des bits $y_5y_6$ commande la formation du produit partiel P3 qui sera appliqué aux troisiemes entrées de la deuxième rangée d'additionneurs ($A2_i$). Le module d'extension de signe commandé par ce même décodeur D3 établira des signaux à appliquer aux entrées des additionneurs de position 16 (essentiellement) et 17 (accessoirement) de la troisième rangée d'additionneurs.

On verra qu'on prévoit un module d'extension de signe pour chaque produit partiel, en pratique un module pour chaque rangée d'additionneurs et deux modules pour la première rangée d'additionneurs.

On peut montrer mathématiquement que, si on appelle S0, S1 et S2...S8 les bits de signe à étendre pour les neuf produits partiels P0 à P8 (produits partiels qui sont tous des nombres de 16 bits), on peut résumer l'influence de l'extension de tous ces produits partiels en ajoutant au résultat de la multiplication erronnée, faite sans extension de signe, la valeur suivante:

$$(S_0^* + 1)2^{16} + S1^*2^{17} + 1.2^{18} + S2^*2^{19} + .... + 1.2^{30} + S8^*.2^{31} \quad (1)$$

Or, la sortie somme de l'additionneur de position 15 de la première rangée ($A1_{15}$) représente un terme de poids $2^{16}$ et celle de l'additionneur de position 16 un terme de poids $2^{17}$; $(S_0^* + I) \, 2^{16}$ peut s'écrire $(S_0^* + S_0^* + S_0) \, 2^{16}$, soit $S_0^*2^{17} + S_02^{16}$. On se sert de ces additionneurs, qui ont des entrées inutilisées, pour réaliser l'addition du terme $(S_0^* + 1)2^{16}$

On réalise alors un premier module d'extension de signe XST0, recevant:
- le bit de poids le plus fort $x_{15}$ du multiplicande et le bit de poids le plus faible $y_0$ du multiplicateur (ou bien recevant simplement $y_0x_{15}$ qui par ailleurs est appliqué à une entrée de l'additionneur $A1_{14}$);
- un signal TCX indiquant si le multiplicande X est signé.

Ce module d'extension fournit un signal $S_0$ appliqué à une entrée de l'additionneur $A1_{15}$ et un signal $S_0^*$ appliqué à une entrée de l'additionneur $A1_{16}$ (en fait, on pourrait prévoir un seul signal $S_o$ sans son complément dans le cas où les additionneurs sont conçus pour avoir une entrée inversée c'est à dire lorsque l'additionneur recevant deux signaux a et b effectue en fait par construction la somme $a^* + b$ et non $a + b$).

Si TCX = 1 (multiplicande X signé), alors le signe à étendre est le bit de poids fort du produit partiel $P_0$, donc $S_0$ est égal à $X_{15}.y_0$.

Si TCX = 0, (multiplicande X non signé), alors le signe à étendre est 0; So = 0.

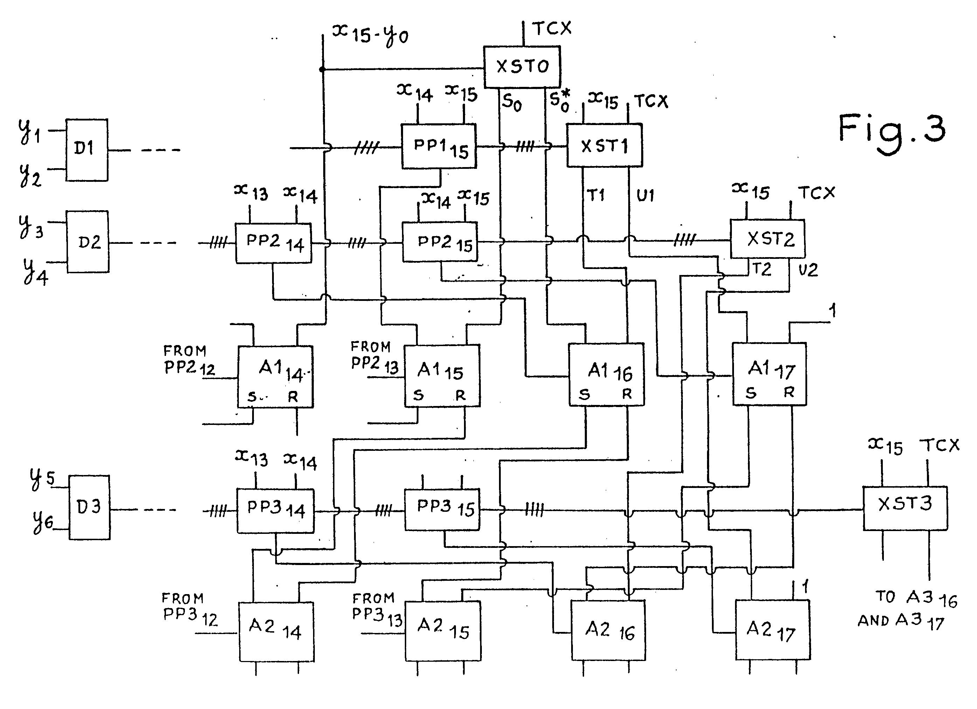

La figure 3 montre l'ensemble des circuits d'extension de signe selon l'invention, et notamment le premier module XST0.

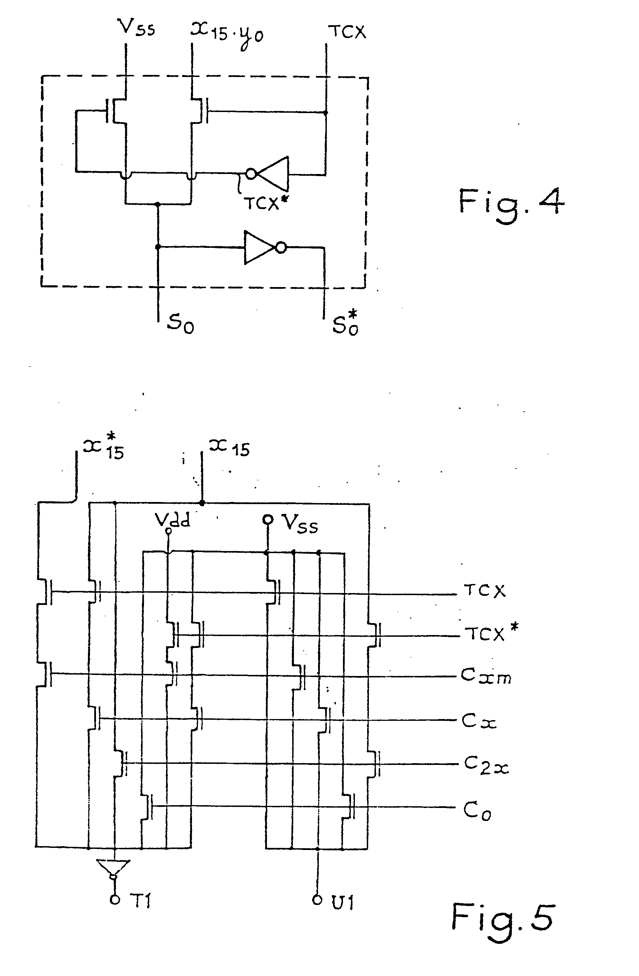

Le détail de ce module est visible à la figure 4. Le signal TCX et son inverse TCX* commandent chacun un transistor MOS dont l'un permet la transmission d'un zéro (Vss) à la sortie $S_0$ et l'autre la transmission de $x_{15}.y_0$.

La sortie $S_0$ peut être inversée par un inverseur pour produire $S_0^*$ si cela est nécessaire.

Revenant à la figure 3, on réalise l'addition du terme $S1^*2^{17}$ par un signal appliqué à une entrée inutilisée de l'additionneur de position 16 de la première rangée ($A1_{16}$) puisque la sortie somme de cet additionneur a justement un poids $2^{17}$.

Ce signal est obtenu à partir d'un module d'extension de signe XST1 relatif au produit partiel P1.

Ce module reçoit le bit $x_{15}$ et le signal TCX indiquant si ce bit est un bit de signe ou non. De plus, comme la valeur du signe à étendre S1, donc du terme $S1^*$, dépend de la valeur du produit partiel P1 qui est 0 ou X ou 2X ou -X, le module d'extension de signe XST1 reçoit les commandes $C_0$, $C_x$, $C2_x$ et $C_{xm}$ correspondant au produit partiel P1 donc issus du premier décodeur D1. On verra plus loin comment on calcule le terme $S1^*$. Cependant on peut déjà donner la précision suivante:

le module d'extension de signe XST1 devrait fournir uniquement un signal $S1^*$ appliqué à l'additionneur $A1_{16}$, la valeur de $S1^*$ dépendant du fait que le multiplicande est signé (TCX = 1) ou non signé (TCX = 0); en fait, on préfère, pour des raisons pratiques, élaborer par le module d'extension de signe deux signaux T1 et U1 dont le premier est appliqué à la dernière entrée libre de l'additionneur $A1_{16}$ et dont le second est appliqué à une entrée libre de l'additionneur $A1_{17}$. La raison de cette disposition est le fait qu'il faut prévoir le cas ou le produit partiel P1 est égal à 2X car dans ce cas il faut rajouter un terme $x_{15}.2^{17}$ au terme $S1^* \, 2^{17}$.

Avant de rentrer plus avant dans ces détails pratiques, on vérifie donc sur la figure 3 que le module d'extension de signe XST1 fournit les signaux T1 et U1 appliqués aux additionneurs $A1_{16}$ et $A1_{17}$.

Pour l'addition du terme $1.2^{18}$ de la somme (1), on applique simplement un 1 à la dernière entrée libre de l'additionneur $Al_{17}$ (dont la sortie "somme" a un poids $2^{18}$).

De la même manière on realise les termes $1.2^{20}$, $1.2^{22}$ etc... par un bit "1" appliqué à une entrée des additionneurs de dernière position des autres rangées, à savoir les additionneurs $A2_{17}$, $A3_{17}$...etc. $A7_{17}$ dont les sorties "somme" correspondent effectivement à des poids respectifs $2^{20} \, 2^{22}$ etc...$2^{30}$.

De la même manière aussi, on réalise l'addition des termes $S2^*.2^{19}$, $S3^*.2^{21}$...$S8^*2^{31}$, chacun par un module d'extension de signe respectif XST2, XST3...XST8, commandé respectivement par les sorties du décodeur correspondant D2, D3...D8 et fournissant chacun deux signaux (T2, U2), (T3, U3)...(T8, U8) appliqués aux deux derniers additionneurs de chaque rangée. Par exemple, comme on le voit sur la figure 3, le module XST2 fournit.un signal T2 à une entrée de l'àdditionneur $A2_{16}$ et un signal U2 à une entrée de l'additionneur $A2_{17}$.

6

En revenant à l'élaboration des signaux issus de chaque module d'extension de signe, il faut étudier le tableau des valeurs possibles du signe à étendre;

Prenant par exemple le signe S1 du produit partiel P1, on à les cas possibles suivants: en fonction des valeurs de $X_{15}$ et du produit partiel P1.

```
        1. Multiplicande X signé (TCX = 1)

            1.1   P1 =   0   alors   S1  = 0      S1* = 1

            1.2   P1 =   X   alors   S1  = x15    S1* = x15*

            1.3   P1 = -X    alors   S1  = x15*   S1* = x15

            1.4   P1 = 2X    alors   S1  = x15    S1* = x15*

        2. Multiplicande X non signé (TCX = 0)

            2.1   P1 =   0   alors   S1  = 0      S1* = 1

            2.2   P1 =   X   alors   S1  = 0      S1* = 1

            2.3   P1 = -X    alors   S1  = 1      S1* = 0

            2.4   P1 = 2X    alors   S1  = 0      S1* = 1
```

La dernière colonne représente le terme à rajouter sur l'avant-dernier additionneur ($A1_{16}$ pour la première rangée).

Mais, pour les cas ou P1 = 2X, il faut en plus rajouter sur cet additionneur un terme égal a $x_{15}$ car si on regarde bien la figure 3, on voit que dans le cas où P1 = 2X, on décale, par les aiguillages $PP1_0$ à $PP1_{15}$, les bits du multiplicande d'un cran vers la gauche du bit $x_0$ au bit $x_{14}$ mais que le bit $x_{15}$ disparaît car il n'y a pas d'aiguillage $PP1_{16}$ de position 16. C'est le module d'extension de signe (XST1 en l'occurence) qui tient lieu de cet aiguillage manquant.

D'autre part, lorsque P1 = 2x, il faut aussi retrancher

$S1.2^{17}$ à l'équation (1) car l'extension du signe S1 ne commence alors qu'à la puissance 18 et non à la puissance 17 du fait du décalage d'un cran à gauche.

Ainsi, lorsque P1 = 2x, il faut rajouter un terme $S1^* + x_{15} - S1$ au poids $2^{17}$ donc sur l'additionneur $A1_{16}$.

Si le multiplicande est signé, $S1^* = x_{15}^*$; le terme à rajouter est $x_{15}^*$.

Si le multiplicande n'est pas signé, $S1^* = 1$; le terme à rajouter est $1 + x_{15}$.

Il faut donc rajouter soit $x_{15}$; (multiplicande signé) soit $x_{15} + 1$ (multiplicande non signé) sur l'additonneur $A1_{16}$. Comme il n'y a qu'une entrée disponible, on ne peut pas facilement additionner $x_{15} + 1$.

On considère alors dans ce dernier cas que:

$x_{15} + 1 = x_{15} + (x_{15} + x_{15}^*) = 2x_{15} + x_{15}^*$ et on rajoute $x_{15}^*$ sur l'additionneur d'avant dernière position $A1_{16}$ (comme lorsque le multiplicande est signé) et $x_{15}$ sur l'additionneur de dernière position $A1_{17}$ ce qui réalise bien la somme $2x_{15} + x_{15}^*$ sur le poids $2^{17}$.

Les explications qui précédent font comprendre la raison pour laquelle le module d'extension de signe XSTI (et bien entendu les autres aussi) fournit non pas un seul signal qui aurait la valeur $S1^*$ et qui serait appliqué à l'additionneur $A1_{16}$ mais deux signaux dont l'un, T1, appliqué à l'additionneur $A1_{16}$, à essentiellement une valeur égale à $S1^*$ pour P1 = 0, P1 = X et P1 = -X mais a une valeur $x_{15}^*$ pour P1 = 2X (multiplicande signé ou non signé) et dont l'autre, U1, appliqué à l'additionneur $A1_{17}$, a une valeur nulle sauf pour P1 = 2X et TCX = 0 auquel cas $U1 = x_{15}$.

En résumé, la table de vérité nour l'élaboration des signaux T1 et U1 est la suivante;

| Commande | TCX | T1 | U1 |
|---|---|---|---|
| $C_0$ = 1 | 1 | 1 | 0 |
| $C_x$ = 1 | 1 | $x_{15}^*$ | 0 |
| $C_{xm}$ = 1 | 1 | $x_{15}$ | 0 |
| $C_{2x}$ = 1 | 1 | $x_{15}^*$ | 0 |
| $C_0$ = 1 | 0 | 1 | 0 |
| $C_x$ = 1 | 0 | 1 | 0 |
| $C_{xm}$ = 1 | 0 | 0 | 0 |
| $C_{2x}$ = 1 | 0 | $x_{15}^*$ | $x_{15}$ |

Cette table est la même pour les modules d'extension de signe XST1 à XST8.

Là encore, comme pour le module XST0, on peut très bien concevoir que les modules fournissent non pas T1 et U1 tels que définis ci-dessus mais par exemple T1 et U1* si l'additionneur $A1_{17}$ possède une entrée inversée telle que pour additionner U1 il faille entrer U1*.

La figure 5 représente le schéma du module d'extension de signe XST1, les autres étant identiques. Ce schéma est simplement la traduction de la table de vérité ci-dessus. Vss correspond à un niveau logique "0" et Vdd à un niveau "1". Le module reçoit non seulement TCX mais aussi TCX* pour éviter de prévoir un inverseur dans chaque module, et de même il peut recevoir $x_{15}$ et $x_{15}$*.

**Revendications**

1. Multiplieur binaire comportant une pluralité de décodeurs (D1, D2...) recevant chacun deux bits du multiplicateur (Y) et éventuellement une retenue issue d'un décodeur de rang inferieur, chaque décodeur fournissant des signaux de commande ($C_0$, $C_x$, $C_{xm}$, $C2_x$) destinés à définir, pour deux bits donnés du multiplicateur, un produit partiel parmi quatre possibles 0, X, -X ou 2X à additionner aux produits partiels correspondant aux bits de rang inférieur du multiplicateur, l'addition d'un produit partiel aux précédents s'effectuant dans une rangée d'additionneurs élémentaires ($A2_0$ $A2_1$...) recevant les sorties d'une rangée d'aiguillages ($PP3_0$, $PP3_1$...) commandés par les signaux issus d'un décodeur (D2) associé à cette même rangée et à ce produit partiel (P3), les additionneurs recevant par ailleurs les sorties d'additionneurs ($A1_0$, $A1_1$...) d'une rangée précédente, (D1, D2) caractérisé en ce que chaque décodeur commande également un module d'extension de signe (XST1, XST2...) recevant le bit de poids le plus fort ($x_{15}$) du multiplicande (X) et recevant un signal (TCX) indiquant le mode de représentation, signé ou non signé, du multiplicande, ce module fournissant un signal (T1, T2) appliqué à une entrée de nombre à additionner d'un additionneur élémentaire ($A1_{16}$, $A2_{15}$...) de la rangée correspondant au decodeur suivant (D2, D3...) du multiplicande.

2. Multiplieur binaire selon la revendication 1, caractérisé en ce que le module d'extension de signe (XST1 XTS2,...) fournit un signal (T1, T2,...) qui peut prendre les valeurs suivantes en fonction du bit de plus fort poids ($x_{15}$) du multiplicande (X), du signal TCX et du produit partiel commandé par le décodeur correspondant à ce module, ce signal étant appliqué à une entrée d'un additionneur ($A1_{16}$, $A2_{16}$,...)

| Produit partiel : | 0 | multiplicande signé | $\left( T1 = 1 \right)$ |
|---|---|---|---|
| " " : | X | " " | $\left( T1 = x_{15}* \right)$ |
| " " : | -X | " " | $\left( T1 = x_{15} \right)$ |
| " " : | 0 | multiplicande non signé | $\left( T1 = 1 \right)$ |
| **Produit partiel :** | **X** | **Multiplieur non signé** | $T1 = 1$ |
| " " : | **-X** | " " | $T1 = 0$ |

3. Multiplieur binaire selon la revendication 2, caractérisé en ce que le module d'extension de signe (XST1, XTS2,...) fournit deux signaux (T1 et U1, T2 et U2,...) appliqués respectivement à l'avant-dernier ($A1_{16}$, $A2_{16}$,...) et au dernier ($A1_{17}$,...) additionneur de la rangée correspondent au décodeur qui suit immédiatement le décodeur (D1, D2,...) commandant le module d'extension de signe (XST1, XTS2,...) respectivement en ce que le deuxième signal (U1, U2,...) est nul sauf éventuellement lorsque le décodeur commandant le module indique que le produit partiel à réaliser est 2X, et en ce que dans ce dernier cas le signal T1, T2,... est égal à $x_{15}$* et le signal U1, U2... est égal à 0 (multiplicande signé) ou $x_{15}$ (multiplicande non signé), $x_{15}$ étant le bit de plus fort poids du multiplicande.

4. Multiplieur binaire selon la revendication 3, caractérisé en ce que le dernier additionneur de chaque rangée, recevant le deuxième signal (U1, U2...) issu du module d'extension de signe correspondant au décodeur de la rangée précédente, reçoit par ailleurs:

- d'une part, venant du dernier aiguillage de la rangée correspondant à cet additionneur, le bit de plus fort poids ($x_{15}$) de multiplicande ou son complément lorsque le produit partiel à additionner dans cet additionneur est X ou -X, ou le bit précédent ($x_{14}$) lorsque le produit partiel est 2X;

- et d'autre part, un niveau logique "1".

5. Multiplieur binaire selon l'une des revendications 1 à 4, caracterise en ce qu'il est prévu en outre pour la première rangée d'additionneurs un autre module d'extension de signe (XST0) recevant le produit ($x_{15}.y_0$) du bit de plus fort poids du multiplicande et du bit de plus faible poids du multiplicateur, ainsi que le signal (TCX) indiquant si le multiplicande est signé ou non, ce module fournissant deux signaux complémentaires ($S_0$ et $S_0$*) appliqués l'un à l'ante-pénultième additionneur de la première rangée, l'autre à l'avant-dernier additionneur de cette première rangée, le signal $S_0$ ayant la valeur dudit produit.

**0 128 072**

**Patentansprüche**

1. Binärer Multiplizierer, der mehrere Decoder (D1, D2 ...) enthält, welche jeweils zwei Bits des Multiplikators (Y) und gegebenenfalls einen Übertrag empfangen, welcher von einem Decoder niedrigerer Ordnungszahl ausgeht, wobei jeder Decoder Steuersignale ($C_0$, $C_x$, $C_{xm}$, $C_{2x}$) liefert, die dazu bestimmt sind, für zwei gegebene Bits des Multiplikators ein partielles Produkt unter den vier möglichen 0, X, -X oder 2X zu definieren, das zu den partiellen Produkten hinzuzuaddieren ist, welche den Bits niedrigerer Ordnungszahl des Multiplikators entsprechen, wobei die Addition eines partiellen Produktes zu den vorausgehenden in einer Reihe von elementaren Addierern ($A2_0$, $A2_1$...) erfolgt, welche die Ausgangssignale einer Reihe von Umschaltern ($PP3_0$, $PP3_1$...) empfangen, die durch die Signale gesteuert werden, welche von einem Decoder (D2) ausgehen, welcher dieser Reihe und diesem partiellen Produkt (P3) zugeordnet ist, wobei die Addierer ferner die Ausgangssignale von Addierern ($A1_0$, $A1_1$...) einer vorausgehenden Reihe (D1, D2) empfangen, dadurch gekennzeichnet, daß jeder Decoder ferner einen Zeichen-Erweiterungsmodul (XST1, XST2...) steuert, welcher das höchstwertige Bit ($x_{15}$) des Multiplikanden (X) empfängt und ein Signal (TCX) empfängt, welches die Darstellungsweise des Multiplikanden anzeigt, nämlich mit oder ohne Zeichen, wobei dieser Modul ein Signal (T1, T2...) liefert, welches an einen einer zu addierenden Zahl zugeordneten Eingang eines elementaren Addierers ($A1_{16}$, $A2_{15}$...) der dem nächsten Decoder (D2, D3...) des Multiplikanden entsprechenden Reihe angelegt wird.

2. Binärmultiplizierer nach Anspruch 1, dadurch gekennzeichnet, daß der Zeichen-Erweiterungsmodul (XST1, XTS2, ...) ein Signal (T1, T2, ...) liefert, welches in Abhängigkeit von dem höchstwertigen Bit ($x_{15}$) des Multiplikanden (X) die folgenden Werte des Signals TCX und des partiellen Produktes annehmen kann, gesteuert durch den diesem Modul entsprechenden Decoder, wobei dieses Signal an einen Eingang eines Addierers ($A1_{16}$, $A2_{16}$, ...) angelegt wird:

```
Partielles Produkt: 0    Multiplikand mit Zeichen (T1 = 1)
      "         "  : X        "        "      "    (T1 = x₁₅*)
      "         "  :-X        "        "      "    (T1 = x₁₅)
      "         "  : 0    Multiplikand ohne Zeichen (T1 = 1)
      "         "  : X    Multiplikator ohne Zeichen  T1 = 1
      "         "  :-X        "        "      "       T1 = 0
```

3. Binärmultiplizierer nach Anspruch 2, dadurch gekennzeichnet, daß der Zeichen-Erweiterungsmodul (XST1, XTS2, ...) zwei Signale (T1 und U1, T2 und U2, ...) liefert, von denen das eine an den vorletzten ($A1_{16}$, $A2_{16}$, ...) und das andere an den letzten ($A1_{17}$, $A2_{17}$, ...) Addierer der entsprechenden Reihe des Decoders angelegt wird, die unmittelbar auf den Decoder (D1, D2, ...) folgt, welcher den Zeichen-Erweiterungsmodul (XST1, XTS2, ...) steuert, daß das zweite Signal (U1, U2, ...) verschwindet, außer wenn gegebenenfalls der den Modul steuernde Decoder anzeigt, daß das zu bildende partielle Produkt 2X ist, und daß im letzteren Falle das Signal T1, T2 gleich $x_{15}$* ist und das Signal U1, U2, ... gleich 0 ist (Multiplikand mit Zeichen) oder $x_{15}$ ist (Multiplikand ohne Zeichen), wobei $x_{15}$ das höchstwertige Bit des Multiplikanden ist.

4. Binärmultiplizierer nach Anspruch 3, dadurch gekennzeichnet, daß der letzte Addierer jeder Reihe, welcher das zweite Signal (U1, U2...) empfängt, das von dem Zeichen-Erweiterungsmodul ausgeht, der dem Decoder der vorausgehenden Reihe entspricht, ferner empfängt:
- einerseits von dem letzten Umschalter der diesem Addierer entsprechenden Reihe das höchstwertige Bit ($x_{15}$) des Multiplikanden oder sein Komplement, wenn das partielle Produkt, welches in diesem Addierer addiert werden soll, gleich X oder -X ist, oder das vorausgehende Bit ($x_{14}$), wenn das partielle Produkt 2X ist;
- und andererseits einen Logikpegel "1".

5. Binärmultiplizierer nach einem der Ansprüche 1 bis 4, dadurch gekennzeichnet, daß ferner für die erste Reihe von Addierern ein weiterer Zeichen-Erweiterungsmodul (XST0) vorgesehen ist, welcher das Produkt ($x_{15}.y_0$) des höchstwertigen Bits des Multiplikanden mit dem niedrigstwertigen Bit des Multiplikators empfängt, ebenso wie das Signal (TCX), welches anzeigt, ob der Multiplikand mit einem Zeichen behaftet ist oder nicht, wobei dieser Modul zwei komplementäre Signale ($S_0$ und $S_0$*) liefert, von denen das eine an den vorvorletzten Addierer der ersten Reihe und das andere an den vorletzten Addierer dieser ersten Reihe angelegt wird, wobei das Signal $S_0$ den Wert des genannten Produktes aufweist.

**Claims**

1. Binary multipier comprising a plurality of decoders (D1, D2...) each receiving two bits of the multiplicator (Y) and eventually a carry-over issued from a decoder of inferior order, each decoder supplying control signals ($C_0$, $C_x$, $C_{xm}$, $C_{2x}$) intended to define, for two given bits of the multiplicator, a partial product among four

9

possible ones 0, X, -X or 2X to be added to the partial products corresponding to the bits of inferior order of the multiplicator, a partial product being added to the preceding ones in a row of elementary adders ($A2_0$, $A2_1$...) receiving the outputs of a row of change-over elements ($PP3_0$, $PP3_1$...) controlled by the signals issued from a decoder (D2) associated with this same row and this partial product (P3), the adders further receiving the outputs of adders ($A1_0$, $A1_1$...) of a preceding row (D1, D2), characterized in that each decoder further comprises a sign extension module (XST1, XST2...) receiving the most significant bit ($x_{15}$) of the multiplicand (X) and receiving a signal (TCX) indicating the mode of representation, signed or unsigned, of the multiplicand, this module supplying a signal (T1, T2,...) applied to an input, associated with a number to be added, of an elementary adder ($A1_{16}$, $A2_{15}$...) of the row corresponding to the following decoder (D2, D3...) of the multiplicand.

2. Binary multiplier according to claim 1, characterized in that the sign extension module (XST1, XTS2,...) supplies a signal (T1, T2,...) susceptible to take the following values, in function of the most significant bit ($x_{15}$) of the multiplicand (X), of the signal TCX and of the partial product controlled by the decoder corresponding to this module, this signal being applied to an input of an adder ($A1_{16}$, $A2_{16}$,...):

```
Partial product:  0  signed multiplicand  (T1 = 1)
    "       "    : X       "       "       (T1 = x₁₅*)
    "       "    :-X       "       "       (T1 = x₁₅)
    "       "    : 0  unsigned multiplicand(T1 = 1)
    "       "    : X       "       "        T1 = 1
    "       "    :-X       "       "        T1 = 0
```

3. Binary multiplier according to claim 2, characterized in that the sign extension module (XST1, XTS2,...) applies two signals (T1 and U1, T2 and U2,...) respectively applied to the penultimate ($A1_{16}$, $A2_{16}$,...) and to the last ($A1_{17}$, $A2_{17}$,...) adder of the row corresponding to the decoder immediately following the decoder (D1, D2,...) controlling the sign extension module (XST1, XTS2,...), respectively, in that the second sign (U1, U2,...) is zero, except eventually when the decoder controlling the module indicates that the partial product to be formed is 2X, and in that, in the latter case, the signal T1, T2,... is equal to $x_{15}$ and the signal U1, U2,... is equal to zero (signed multiplicand) or $x_{15}$ (unsigned multiplicand), $x_{15}$ being the most significant bit of the multiplicand.

4. Binary multiplier according to claim 3, characterized in that the last adder of each row receiving the second signal (U1, U2 ...) issued from the sign extension module corresponding to the decoder of the preceding row further receives:
- on the one hand, from the last change-over element of the row corresponding to this adder, the most significant bit ($x_{15}$) of the multiplicand and its complement when the partial product to be added in this adder is X or -X, or the preceding bit ($x_{14}$) when the partial product is 2X;
- and, on the other hand, a logic level "1".

5. Binary multiplier according to any of claims 1 to 4, characterized in that, for the first row of adders, a further sign extension module (XST0) is provided which receives the product ($x_{15}.y_0$) of the most significant bit of the multiplicand and of the least significant bit of the multiplicator, as well as the signal (TCX) indicating whether or not the multiplicand is signed, this module supplying two complementary signals ($S_0$ and $S_0^*$) one of which is supplied to the antepenultimate adder of the first row and the other to the penultimate adder of this first row, the signal $S_0$ having the value of said product.

Fig.1

Fig.2

Fig.3

0 128 072

Fig.4

Fig.5

7